(19) Europäisches Patentamt
European Patent Office
Office européen des brevets

(11) Veröffentlichungsnummer : **0 071 257**
**B1**

(12) **EUROPÄISCHE PATENTSCHRIFT**

(45) Veröffentlichungstag der Patentschrift :
20.02.85

(51) Int. Cl.⁴ : **G 01 N 21/89**

(21) Anmeldenummer : **82106817.8**

(22) Anmeldetag : **28.07.82**

(54) Verfahren und Vorrichtung zum Prüfen von transparenten Materialbahnen.

(30) Priorität : **29.07.81 DE 3129808**
**22.06.82 DE 3223215**

(43) Veröffentlichungstag der Anmeldung :
**09.02.83 Patentblatt 83/06**

(45) Bekanntmachung des Hinweises auf die Patenterteilung : **20.02.85 Patentblatt 85/08**

(84) Benannte Vertragsstaaten :
**AT BE CH DE FR GB IT LI LU NL SE**

(56) Entgegenhaltungen :
**FR-A- 2 187 118**
**FR-A- 2 263 509**
**US-A- 3 652 863**
**US-A- 3 871 773**
**IBM TECHNICAL DISCLOSURE BULLETIN, Band 20,**
**Nr. 11B, April 1978, Seiten 4795-4796, New York, USA**
**K.F. STROMS: "Method to detect tin contamination on**
**plate glass"**
**PATENTS ABSTRACTS OF JAPAN, Band 1, Nr. 139,**
**15. November 1977, Seiten 6831E77**

(73) Patentinhaber : **Feldmühle Aktiengesellschaft**
**Fritz-Vomfelde-Platz 4**
**D-4000 Düsseldorf 11 (DE)**

(72) Erfinder : **Haubold, Wolfgang**
**Koliwitzerstrasse 73**
**D-4800 Bielefeld 1 (DE)**
Erfinder : **Farwick, Gerhard**
**Marderweg 3**
**D-4811 Leopoldshöhe 1 (DE)**

(74) Vertreter : **Uhlmann, Hans, Dr. rer.nat., Dipl.-Chem.**
**Gladbacher Strasse 189**
**D-4060 Viersen 1 (DE)**

**Beschreibung**

Die Erfindung betrifft ein Verfahren und eine Vorrichtung zum Prüfen einer transparenten Materialbahn, insbesondere Flachglas auf in der Bahn eingeschlossene Fehler wie Fremdkörper oder Gasblasen, bei dem die Materialbahn mit einem fliegenden Lichtpunkt über ihre Breite abgetastet und das durchgelassene und/oder reflektierte Licht aufgefangen, in elektrische Signale umgesetzt und ausgewertet wird.

Unter transparenten Materialbahnen im Sinne der vorliegenden Erfindung sind Kunststoffe, organische Gläser, insbesondere jedoch Tafelglas zu verstehen. Da Tafelglas in großen Mengen als Flachglas, in Form eines endlosen Bandes maschinell hergestellt wird, ist man selbstverständlich bestrebt, die Fehlerquellen hierbei möglichst klein zu halten, so daß bei der Flachglasherstellung der größte Bedarf an Prüfgeräten besteht. Die Erfindung wird daher, ohne sie darauf zu beschränken, am Beispiel der Flachglasprüfung abgehandelt.

Bei der Flachglasherstellung, beispielsweise auf Floatglasanlagen, kommt es trotz äußerster Vorsicht bei der Herstellung immer noch dazu, daß feine, meist helle Steinchen in die Glasbahn eindringen. Ein weiterer, ebenfalls häufiger Fehler sind Gasblasen, die sich in feinverteiltem Zustand in der Schmelze befinden. Beide Fehler führen, wenn sie eine gewisse Dimension erreichen, in der Glasbahn zu einer Oberflächenverformung, auch wenn sie völlig vom Glas eingeschlossen sind. Oberflächenverformungen können jedoch sehr gut durch elektrooptische Prüfvorrichtungen und Verfahren ermittelt werden, wie sie beispielsweise in der DE-A-24 11 407 beschrieben sind. Das trifft jedoch nicht auf Fehler zu, die so klein sind, daß sie die Oberfläche der Glasbahn nicht verändern, was insbesondere bei kleinen Kernblasen der Fall ist, so daß diese Kernblasen insbesondere dann, wenn die zu prüfende Oberfläche nicht 100 % sauber ist, nicht von den üblichen Vorrichtungen erfaßt werden.

Aus der FR-A-21 87 118 ist eine Vorrichtung zum Prüfen von Flachglas bekannt, bei der ein Laserstrahl auf die Dicke des Glases aufgeweitet und von der Längsseite des Glases her in dieses eingeleitet wird. Oberhalb der Flachglasfläche sind Glasfaserbündel angeordnet, die durch Fehler im Glas abgelenktes Licht erfassen und zur Auswertung weiterleiten. Abgesehen davon, daß mit diesem Aggregat nur Fehler erfaßt werden können, die sich innerhalb der Materialbahn befinden, also keine Oberflächenfehler gleichzeitig ermittelt werden können, ist es absolut erforderlich, daß die Längsseite des Glases geschnitten und damit plan ist, damit der Laserstrahl in die Flachglasbahn eintreten kann. Ein weiterer Nachteil liegt darin begründet, daß zum Durchdringen breiter Glasbahnen recht hohe Laserleistungen installiert werden müssen, da der Strahler die volle Bahnbreite durchdringen muß, was aufgrund der stets auftretenden Absorption auf der gegenüberliegenden Seite zu nur sehr schwachen Signalen führt.

Die Prüfung von Floatglas erfolgt üblicherweise deshalb so, daß die gesamte Materialbahnbreite der sich kontinuierlich bewegenden Materialbahn mit einem fliegenden Licht abgetastet wird. Der fliegende Lichtpunkt wird im allgemeinen, um eine hohe Leuchtdichte zu erhalten, durch einen Laserstrahler erzeugt, der auf ein umlaufendes, verspiegeltes Polygon gerichtet wird, so daß der Lichtstrahl infolge der hohen Drehzahl des Polygons mit hoher Geschwindigkeit die Flachglasbahn überstreicht und dabei den fliegenden Lichtpunkt bildet. Ein Teil des Strahles wird bereits an der Oberfläche der Glasbahn reflektiert, ein weiterer Teil tritt in die Glasbahn ein, wird von der Unterfläche der Glasbahn reflektiert, der größte Teil des Strahles tritt nach Brechung durch die Glasbahn hindurch.

Der vorliegenden Erfindung liegt daher die Aufgabe zugrunde, in einer transparenten Materialbahn, ohne sie randseitig zu beschneiden, Fehler zu ermitteln, die nicht zu einer Oberflächenverformung der Materialbahn führen. Insbesondere sollen sogenannte Kernblasen, d. h. Gasblasen, die sich mehr oder weniger in der Mitte der Materialbahn befinden und die sehr fein sind, so daß sie von im Vergleich zu ihren Abmessungen dicken Materialbahnschichten abgedeckt sind, ermittelt werden.

Diese Aufgabe wird gelöst durch ein Verfahren zum Prüfen einer transparenten Materialbahn, insbesondere Flachglas auf in der Bahn eingeschlossene Fehler, wie Fremdkörper oder Gasblasen, bei dem die Materialbahn mit einem fliegenden Lichtpunkt über die Breite abgetastet und das durchgelassene und/oder reflektierte Licht aufgefangen, in elektrische Signale umgesetzt und ausgewertet wird, das dadurch gekennzeichnet ist, daß während des Abtastzyklus das seitlich aus der Materialbahn austretende Licht zusätzlich erfaßt und in ein elektrisches Signal umgesetzt wird, wobei die von eingeschlossenen Fehlern herrührenden Anteile dieses Signals als elektrische Impulse erscheinen und daß diese Impulse zur Auswertung benutzt werden.

Fehlerprüfgeräte der in der DE-A-24 11 407 beschriebenen Art tasten mit einem fliegenden Lichtpunkt die Breite einer sich meist mit relativ hoher Geschwindigkeit bewegenden Materialbahn auf Oberflächenfehler ab. Sie besitzen eine einstellbare Empfindlichkeit, die bei transparenten Materialien ermöglicht, sowohl einen Fehler auf der Oberseite als auch einen Fehler auf der Unterseite bei der Abtastung der Materialbahn von oben zu erfassen. In der Materialbahn eingeschlossene Kernblasen und auch feine, eingeschlossene Fremdkörper führen dabei nicht zu einer so starken Strahlablenkung, wie das Verformungen der Oberfläche tun, d. h., das durch diese Fehler erzeugte Signale ist so schwach, daß es den Signalen entspricht, die durch feine, sich auf der Materialbahn ablagernde Staubpartikel verursacht werden. Diese Signale werden jedoch in der Auswertestation des Prüfgerätes abgeschnitten, wobei die Schwelle dieses Schnittes in ihrer Höhe einstellbar ist. Die Empfindlichkeit wird also so weit heruntergeregelt, daß die Oberflächenverschmutzung nicht zu einem Fehlersignal führt.

Ist in der Glasbahn jedoch eine Kernblase oder ein feines Steinchen eingeschlossen, so wird der auftreffende Lichtpunkt in der Gasblase bzw. an der Oberfläche des Steinchens umgelenkt und in der Materialbahn weitergeleitet. Die Materialbahn selbst wirkt also in diesem Fall wie ein Lichtleiter. Da sowohl die Kernblasen, d. h. also die kleinen Gasblasen, als auch eingeschlossene Steinchen im wesentlichen kugelförmige Gestalt haben, wird der auf sie auftreffende oder in sie eintretende Lichtstrahl entsprechend seiner seitlichen Bewegung und dem sich damit ändernden Auftreffwinkel, zumindest einmal auch parallel zur Abtastlinie in der Materialbahn reflektiert und gelangt auf diese Art und Weise zur rechten oder linken Seitenkante der Materialbahn, wo er als kurzzeitig aufblitzender, heller Lichtpunkt sichtbar wird.

Eine Aussage über den Fehler als solchen ist jedoch dabei noch nicht zu machen, d. h. die Fehlergröße kann aufgrund dieses seitlich aufleuchtenden Lichtpunktes nicht angegeben werden. Damit ist auch keine Entscheidung möglich, ob diese betreffende Materialbahn ausgeschieden werden muß, oder ob ihre Verwendung wegen minimaler Größe des Fehlers noch vertretbar ist. Das seitlich aus der Bahn austretende Licht wird daher aufgefangen, in ein elektrisches Signal umgesetzt, wobei die von eingeschlossenen Fehlern herrührenden Anteile dieses Signals als elektrische Impulse erscheinen, und zur Steuerung des Auswerteaggregates benutzt, d. h., daß in dem Moment, in dem der Lichtpunkt an einer oder beiden Seiten der zu prüfenden Materialbahn austritt, der Fehler lokalisiert und in seiner Größe erkannt werden kann. Die normale Oberflächenverschmutzung der zu prüfenden Materialbahn führt nicht zu einer Fehleranzeige.

Der fliegende Lichtpunkt wird zweckmäßig durch einen Laser erzeugt, da auf diese Art und Weise relativ hohe Energien aufgebracht werden können, d. h., daß das Abtasten relativ breiter Materialbahnen ohne störenden Leistungsverlust zum Rand hin möglich wird.

Eine besonders bevorzugte Ausgestaltung der Erfindung sieht dabei vor, daß der fliegende Lichtpunkt die Farbe der Materialbahn aufweist. Übliche Tafelgläser weisen, herrührend von geringen Spuren Eisen in der Schmelze, eine leicht grünliche Färbung auf, was man jedoch nur feststellen kann, wenn man die Stirnflächen des Tafelglases betrachtet. Aufgrund des relativ langen Weges, den der Lichtpunkt im Glas zurücklegen muß, bevor er seitlich sichtbar wird, wirkt dieses Glas wie ein Farbfilter, d. h., daß im Falle dieser Grünfärbung einfallendes rotes Licht nach einer bestimmten zurückgelegten Wegstrecke im Glas aufgrund der Filterwirkung verschwunden, also weggefiltert ist. Dagegen wird Licht der gleichen Wellenlänge, die der Färbung des Glases entspricht, nicht weggefiltert, sondern unterliegt nur der normalen Absorption und erreicht daher mit geringerem Verlust die Seitenflächen.

Durch Einsatz eines Lasers, der in der gleichen Farbe strahlt, die die zu prüfende Materialbahn aufweist, ist es damit möglich, die Leistung des Lasers geringer zu wählen und so Kosten an Energie und Material einzusparen, dabei gleichzeitig aber eine optimale Wirkung sicherzustellen.

Alle transparenten Materialien absorbieren jedoch einen gewissen Teil des durch sie durchtretenden Lichtes, d. h., daß bei den relativ breiten Flachglasbahnen, deren Breite oft über 3 m beträgt, beim Auftreten einer sogenannten Kernblase, also einer Gasblase in der Bahnmitte, das von dieser Blase reflektierte Licht einen Weg von ca. 1,50 m nach einer der beiden Seiten zurücklegen muß, ehe es von einem fotoelektrischen Wandler, im allgemeinen einem Fotomultiplier, aufgenommen werden kann. Es ergibt sich dadurch eine erhebliche Absorption des Lichtes, d. h., daß es nicht möglich ist, ohne zusätzliche Verstärkung des vom Fotomultiplier abgegebenen Impulses eine genaue Aussage über diesen gerade ermittelten Fehler zu machen. Andererseits ergibt sich beim Wandern des Lichtstrahles zum Materialbahnrand hin ein immer deutlicheres Fehlersignal, auch dann, wenn die Größe des ermittelten Fehlers gleich ist und auch seine Anordnung in der Bahn identisch mit dem Fehler ist, der in Bahnmitte ermittelt wurde. Desweiteren kommt hinzu, daß die zu prüfende Materialbahn, also das Floatglas, nie 100 %ig sauber ist, d. h. also, daß sowohl die Oberseite als auch die Unterseite Staubpartikel aufweisen können, die ebenfalls eine Reflektion des Strahles in das Glas möglich machen. Es ist also immer ein gewisser Rauschpegel vorhanden, wobei auch dieser Rauschpegel sich ändert, d. h., bei Abtastung in Bahnmitte ist er wesentlich geringer als bei Abtastung in Bahnrand, so daß Fehler, die in Bahnmitte auftreten, innerhalb des Rauschpegels liegen können, der am Bahnrand existiert. Damit ist es wesentlich, den Rauschpegel so differenziert zu unterdrücken und die Absorption der transparenten Materialbahn so zu berücksichtigen, daß ein gleichartiger und gleich großer Fehler im Randbereich der Materialbahn genau die gleichen Impulse abgibt wie ein entsprechender Fehler im Mittenbereich der Materialbahn.

Eine bevorzugte Ausgestaltung der Erfindung sieht daher vor, daß das elekrische Signal in Abhängigkeit von der Position des Lichtpunktes bezüglich der Breite der Materialbahn mit einem dieser Position zugeordneten Referenzwert verglichen wird und bei Überschreiten dieses Referenzwertes ein Fehlersignal ausgelöst wird.

Eine zweckmäßige Ausgestaltung der Erfindung sieht vor, daß als Referenzwert ein wählbarer Wert in einen elektronischen Speicher eingegeben wird. Diese Ausführungsform empfiehlt sich insbesondere, wenn lediglich ein Material, also beispielsweise eine einzige Glassorte geprüft werden soll, so daß die Materialbahn von der Zusammensetzung und auch von der Dicke her keinen Änderungen unterworfen ist. In diesem Falle reicht es, einmal eine Absorptionskurve des Materials aufzuzeichnen und diese abzuspeichern.

Unter dem Begriff elektronische Speicher sind Halbleiterspeicher zu verstehen, die sich nach den verwendeten Schaltungstechniken unterscheiden. Neben den Schieberegistern können Speichertypen wie RAM oder ROM oder PROM eingesetzt werden, wobei sich die PROMs — programmable read only memories — besonders bewährt haben. Die PROMs sind Festwertspeicher, die nach dem Herstellungsprozeß mit dem gewünschten Bit-muster versehen werden, was beispielsweise durch Wegbrennen von bestimmten Verbindungen innerhalb der Halbleiterschaltung geschehen kann. Diese Programmierung ist nicht mehr rückgängig zu machen, d. h., daß nach dem Schießen eines PROMs keine Änderung der einmal eingegebenen Information möglich und damit eine ungewollte Veränderung des Prüfzustandes nicht möglich ist. Bei einer zweiten Programmiermöglichkeit der PROMs wird die Kapazität der hochisolierten Gateelektroden ausgenutzt, die durch Bestrahlen mit UV-Licht entladen und durch nochmaliges Anlegen einer entsprechend hohen Spannung neu geladen, d. h. programmiert werden können.

In der Logik des Auswerteaggregates wird der Wert des eingehenden Impulses mit dem der jeweiligen Abtaststellung des Abtaststrahles entsprechenden Wert der gespeicherten Impulse verglichen und beim Überschreiten des gespeicherten Impulswertes ein Fehlersignal ausgelöst. Selbstverständlich ist es dabei möglich, mehrere PROMs zu schießen, die verschiedenen Kurven entsprechen, d. h. also, daß auch verschiedene Materialbahnen nach jeweiliger Vorwahl des geeigneten Speichers geprüft werden können. Zweckmäßig können in diesem Falle als Speicher auch RAMs eingesetzt werden, die zwar nicht die Fähigkeit haben, gespeicherte Daten über lange Zeit zu behalten, jedoch nach Belieben programmiert werden können.

Eine bevorzugte Ausführung der Erfindung ist dadurch gekennzeichnet, daß aus dem den fliegenden Lichtpunkt bildenden Abtaststrahl ein Referenzstrahl abgeteilt und über einen sich über die gesamte Breite der Materialbahn erstreckenden fehlerfreien Referenzstreifen geführt wird und daß das seitlich aus dem Referenzstreifen austretende Licht erfaßt und in ein elektrisches Signal umgewandelt wird und daß dieses elektrische Signal als Referenzwert verwendet wird.

Durch diese Ausgestaltung der Erfindung ist sichergestellt, daß stets exakte Werte erreicht werden, weil die identische Materialbahn als Referenzstreifen herangezogen wird. Selbstverständlich ist es auch möglich, einen Referenzstreifen einzusetzen, der der zu prüfenden Materialbahn im wesentlichen entspricht, ihr also nicht völlig identisch ist. Dann muß jedoch in Kauf genommen werden, daß die erhaltenen Referenzimpulse nicht 100 %ig den Impulsen entsprechen, die aus der zu prüfenden Materialbahn erhalten werden, d. h., man muß eine gewisse Toleranzgrenze in Kauf nehmen.

Eine Vorrichtung zur Durchführung des Verfahrens besteht zweckmäßig aus mindestens einem eine zu prüfende transparente Materialbahn über ihre Breite mit einem fliegenden Lichtpunkt abtastenden Prüfgerät, einem das reflektierte und/oder durchgelassene Licht aufnehmenden und in elektrische Signale umwandelnden Empfänger und einer diesem zugeordneten Auswertestation, gekennzeichnet durch die zusätzliche seitliche Zuordnung von mindestens einem seitlich aus der Materialbahn austretendes Licht aufnehmenden und in ein elektrisches Signal umwandelnden Multiplier zu mindestens einer Stirnfläche der Materialbahn, welcher Fotomultiplier mit der Auswertestation verbunden ist.

Die zusätzliche Anordnung eines einzigen Fotomultipliers an einer Längsseite der zu prüfenden, transparenten Materialbahn ermöglicht bereits ein Auffinden von Kernblasen, d. h., daß das bisher serienmäßig verwandte Gerät, beispielsweise ein Gerät gemäß der DE-A-24 11 407, über den zusätzlichen Fotomultiplier gesteuert werden kann und dann Kernblasen und Einschlüsse in der Glasbahn entdeckt. Vorteilhaft ist der Fotomultiplier dabei in Höhe der durch den fliegenden Lichtpunkt auf der Materialbahn beschriebenen Abtastlinie angeordnet, da der in die Glasbahn eintretende Lichtstrahl zwar nach verschiedenen Seiten reflektiert wird, die Strecke parallel zur Abtastlinie jedoch die kürzeste Strecke ist, so daß von allen Punkten, an denen der Lichtstrahl im Bereich der Materialseitenkante austritt, der Bereich der Abtastlinie den größten Helligkeitswert und damit den stärksten und klarsten Impuls liefert.

Eine bevorzugte Vorrichtung zur Durchführung der Prüfung ist dadurch gekennzeichnet, daß der der Stirnfläche der zu prüfenden Materialbahn zugeordnete Fotomultiplier oberhalb der Materialbahn angeordnet und über einen seitlich der Materialbahn angeordneten ersten Spiegel mit dem seitlich aus der Materialbahn austretenden Licht beaufschlagt ist, und daß unterhalb der Materialbahn ein weiterer Spiegel so angeordnet ist, daß auf der Unterseite der Bahn austretendes Licht ebenfalls zum Fotomultiplier gelenkt wird.

Das durch eine Kernblase oder einen Einschluß in der Materialbahn geleitete Licht tritt am unbearbeiteten Materialbahnrand aus und wird hier gestreut. Es gelangt also sowohl nach der Seite als auch nach oben und nach unten, so daß seine Erfassung bei einer rein seitlichen Anordnung des Fotomultipliers Schwierigkeiten bereitet. Durch das einfache Anordnen einer Spiegelfläche unterhalb des Längsrandes wird jedoch auch ein großer Teil der aus der unbearbeiteten Stirnfläche der Materialbahn austretenden Lichtmenge noch vom Spiegel erfaßt und auf den oberhalb der Materialbahn angeordneten Fotomultiplier reflektiert, der zusätzlich auch mit direkt nach oben austretendem Licht beaufschlagt wird. Die Lichterfassung wird dadurch wesentlich verbessert.

Eine vorteilhafte Ausgestaltung der Erfindung sieht vor, daß dem Prüfgerät ein sich über die gesamte Breite der Materialbahn erstreckender Referenzstreifen aus einem fehlerfreien, der Materialbahn in Dicke, Färbung und Zusammensetzung entsprechenden oder identischen Material zugeordnet ist, daß aus dem den fliegenden Lichtpunkt bildenden Abtaststrahl ein Referenzstrahl abgeteilt ist und über den Referenzstreifen geführt ist und daß der Referenzstreifen an seinen schmalen Stirnseiten mit je einem fotoelektrischen Wandler versehen ist, der das aus dem Referenzstreifen austretende Licht in ein elektrisches Signal umwandelt, wobei dieses elektrische Signal als Referenzwert der Auswertestation zugeführt ist.

Die Schmalseiten dieses Referenzstreifens liegen parallel zu den Längsrändern der zu prüfenden, transparenten Materialbahn, sind aber im Gegensatz zu diesen bearbeitet, so daß keine undefinierte Streuung auftritt. Da die Streifen auch relativ schmal sind, kann das gesamte, an diesen Schmalseiten austretende Licht von dem fotoelektrischen Wandler erfaßt werden.

Ein Lichteintritt in diesen Referenzstreifen erfolgt jedoch nur dann, wenn er einer besonderen Vorbehandlung unterzogen worden ist, d. h., im Normalfalle würde, wie bei jedem Flachglas, das Licht durch das Glas hindurchfallen und nicht in das Glas so eingeleitet werden, daß es zu einem erheblichen Prozentsatz an den Stirnseiten, also in diesem Fall den Schmalseiten des Referenzstreifens austritt.

Eine bevorzugte Ausgestaltung der Erfindung sieht deshalb vor, daß der Referenzstreifen mit im gleichen Abstand voneinander sich in Längsrichtung der Materialbahn erstreckenden Einkerbungen versehen ist, die vorteilhafterweise 5 bis 10 mm voneinander entfernt sind. Durch diese Ausgestaltung ergeben sich bei der Auswertung Impulse, die der Zahl der Einkerbungen entsprechen. Jeder Impuls weist entsprechend seinem Abstand von der Materialbahnmitte einen anderen Wert auf, da mit der Annäherung zum Rand des Referenzstreifens, also zu seiner Schmalseite, weniger Licht absorbiert wird und damit ein höheres Signal am fotoelektrischen Wandler ansteht.

Durch Anordnung der Einkerbungen im gleichen Abstand zueinander kann dieses Signal gleichzeitig zur Lagebestimmung von Fehlern verwendet werden, wobei ein Abstand von 5 bis 10 mm voneinander schon eine sehr erhebliche Genauigkeit bei der Fehlerauswertung ermöglicht.

Eine weitere vorteilhafte Ausgestaltung der Erfindung sieht vor, daß der Referenzstreifen mit einem sich über seine gesamte Länge erstreckenden mattierten Streifen versehen ist. Dieser mattierte Streifen ist zweckmäßig eine gesandstrahlte Fläche oder ein auf den Referenzstreifen aufgebrachter transparenter Klebestreifen. Sowohl die gesandstrahlte Fläche als auch der zweckmäßig unterhalb des Referenzstreifens aufgebrachte transparente Klebestreifen ermöglichen das Eintreten des Lichtes in den Referenzstreifen und damit seine Weiterleitung zu den Schmalseiten und die Aufnahme in den fotoelektrischen Wandler. Abweichend von den vorher beschriebenen Einkerbungen ergibt sich jedoch jetzt in dem Wandler nicht ein Stromimpuls, sondern es tritt beim Auftreffen des Lichtstrahles auf den Referenzstreifen eine bestimmte Spannung auf, die sich in ihrer Höhe ändert. Den geringsten Wert weist diese Spannung auf, wenn der fliegende Lichtpunkt die Mitte des Referenzstreifens erreicht, wo die stärkste Absorption erfolgt. Aus diesem Grund ist der Referenzstreifen auch beidseitig mit fotoelektrischen Wandlern bestückt, da nur geringe Lichtmengen von einem Materialbahnrand, bis zum anderen wandern. Eine von den Wandlern aufgezeichnete Kurve beginnt also für jeden der beiden Wandler in der Mitte der Materialbahn mit einem Wert, der geringfügig über Null liegt und steigt dann mit zunehmender Nähe des Abtastlichtpunktes zum Bahnrand an. Für die Beurteilung der gesamten Bahnbreite müssen dabei die Ergebnisse beider fotoelektrischer Wandler berücksichtigt werden, die sich gegenseitig zur vollen Kurve ergänzen.

Die Erfindung wird nachstehend anhand der Zeichnungen erläutert.

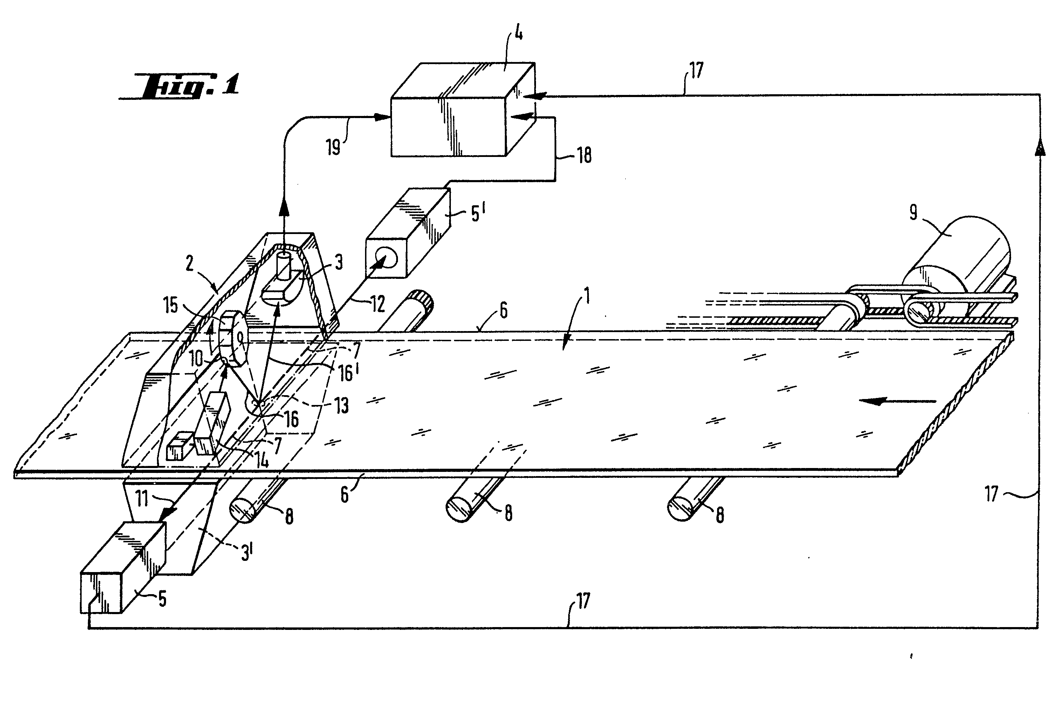

Figur 1    zeigt als Prinzipskizze ein Prüfgerät,

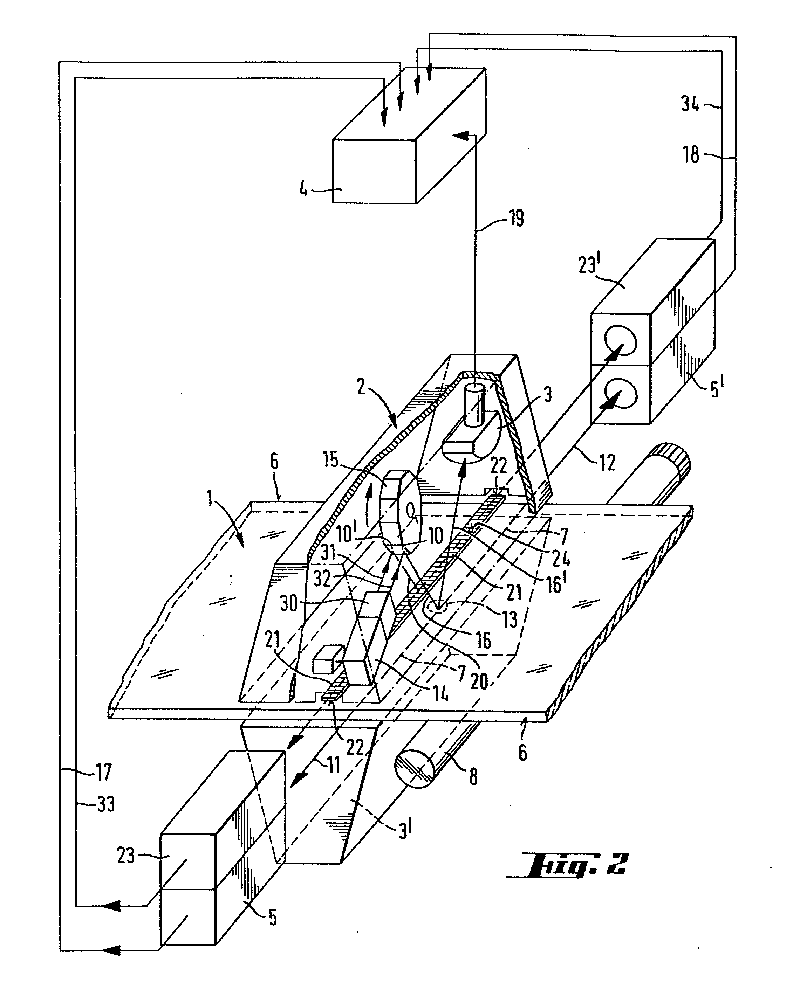

Figur 2    ein Prüfgerät mit Referenzstreifenabtastung,

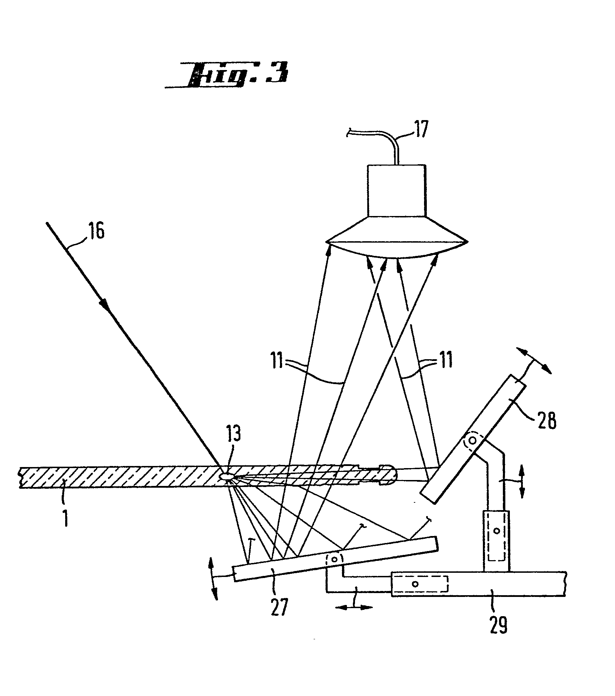

Figur 3    im Detail die Spiegelanordnung am Rand,

Figur 4    die von den Seitenfotomultipliern aufgezeichneten einzelnen, zu einer Kurve verbundenen Impulse.

Die Materialbahn 1 wird mittels Walzen 8, die von einem Elektromotor 9 angetrieben werden, unter dem Prüfgerät 2 herbewegt. Das Prüfgerät 2 enthält einen Empfänger 3 für reflektierte Strahlung und einen Empfänger 3' für durchgelassene Strahlung. Beide Empfänger sind mit einer Auswertestation 4 verbunden, die auch von den seitlich an der Materialbahn 1 angeordneten Fotomultipliern 5, 5' beaufschlagt wird.

Der im Prüfgerät 2 angeordnete Laserstrahler 14 ist mit einem Strahlenteiler 30 versehen, der zwei Teilstrahlen 31 und 32 auf dem rotierenden Spiegelrad 15 abbildet. Der Teilstraht 31 wird als Lichtpunkt 10', der Teilstraht 32 als Lichtpunkt 10 abgebildet und aufgrund der Rotation des Spiegelrades 15 als Abtaststrahl 16 über die gesamte Breite der Materialbahn 1 geführt. Der als Punkt 10' abgebildete Teilstrahl 31 wird gleichzeitig über den Referenzstreifen 21 geführt und tritt durch die Einkerbung 24 in diesen ein. Den Schmalseiten 22 des Referenzstreifens 21 ist je ein fotoelektrischer Wandler 23 bzw. 23' zugeordnet, der das aus dem Referenzstreifen 21 austretende Licht aufnimmt und zur Auswertestation 4 weiterleitet.

Tritt in der Materialbahn 1 ein Fehler in Form einer Kernblase 13 auf, so wird der Abtaststrahl 16 nicht mehr als reflektierter Abtaststrahl 16' den Empfänger 3 erreichen, sondern im wesentlichen abgeleitet als Lichtstrahl 11 bzw. 12 entlang der Abtastlinie 7 zur Stirnfläche 6 der Materialbahn 1 geführt, wo er in den Fotomultiplier 5, 5' eintritt, die den erhaltenen Impuls der Auswertestation 4 zuführen. Die Fotomultiplier 5, 5' sind durch Kabel 17 bzw. 18 mit der Auswertestation 4 verbunden, die fotoelektrischen Wandler 23, 23' analog durch Kabel 33 und 34. Desgleichen erstreckt sich eine elektrische Leitung 19 zwischen dem Empfänger 3 und der Auswertestation 4.

Trifft der Abtaststrahl 16, wie bereits beschrieben, auf eine Kernblase 13, so wird das Licht von der Kernblase 13 abgelenkt und tritt im Bereich der Stirnfläche 6 der Materialbahn 1 aus. Da dieser Lichtaustritt undefiniert ist, ist im Randbereich der Materialbahn 1 ein im wesentlichen horizontal eingestellter Spiegel 27 und ein im wesentlichen vertikal eingestellter Spiegel 28 auf einer verschiebbaren Halterung 29 angeordnet, wobei beide Spiegel so ausgerichtet sind, daß sie auf sie fallendes Licht in den über dem Randbereich der Materialbahn angeordneten Fotomultiplier 5 werfen.

Der Teilstrahl 31 erzeugt auf dem umlaufenden Spiegelrad 15 den Lichtpunkt 10'. Der von diesem gebildete Referenzstrahl 20 tastet den Referenzstreifen 21 ab und tritt bei den Einkerbungen 24 in diesen ein. Durch jede Einkerbung 24 wird damit in dem fotoelektrischen Wandler 23 ein Impuls erzeugt, der in der Auswertestation aufgezeichnet und mit dem jeweiligen, von den Fotomultipliern 5, 5' ermittelten Werten verglichen wird. Bei fehlerfreier Materialbahn 1 sind die ermittelten Werte identisch, weichen also nicht voneinander ab. Analog ist die Auswertung bei Einsatz eines Referenzstreifens 21, der eine mattierte Linie oder einen Klebestreifen aufweist. Das Licht tritt dabei entlang der mattierten Linie bzw. des Klebestreifens in den Referenzstreifen 21 ein und verläßt ihn an seinen Schmalseiten 22, wo es von den fotoelektrischen Wandlern 23 aufgenommen wird. Statt eines Impulses ergibt sich hier jedoch eine sich mit dem Wandern des Referenzstrahles ändernde Spannung, die als Kurve aufgezeichnet werden kann.

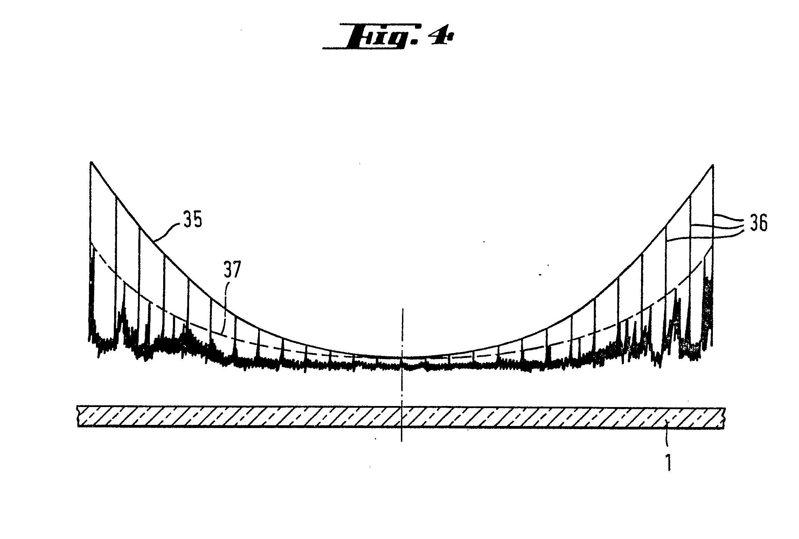

Figur 4 zeigt eine Absorptionskurve 35, die entlang der Spitzen der einzelnen Impulse 36 gezogen wurde, die von den Einkerbungen 24 im Referenzstreifen 21 durch den Referenzstrahl 20 erzeugt wurden. In der gleichen Figur ist unter der Absorptionskurve 35 die Rauschpegelkurve 37 eingezeichnet. Diese Rauschpegelkurve resultiert im wesentlichen von Verunreinigungen auf der Glasober- oder Glasunterseite her und hat bei dem erfindungsgemäßen Verfahren keine Bedeutung. Aus ihr ist jedoch klar ersichtlich, daß in den Randbereichen der Bahn der Rauschpegel wesentlich höher ist, so daß er Fehler, die im Bahnmittenbereich auftreten können, überlagert.

## Ansprüche

1. Verfahren zum Prüfen einer transparenten Materialbahn, insbesondere Flachglas, auf in der Bahn eingeschlossene Fehler, wie Fremdkörper oder Gasblasen, bei dem die Materialbahn mit einem fleigenden Lichtpunkt über ihre Breite abgetastet und das durchgelassene und/oder reflektierte Licht aufgefangen, in elektrische Signale umgesetzt und ausgewertet wird, dadurch gekennzeichnet, daß während des Abtastzyklus das seitlich aus der Materialbahn austretende Licht zusätzlich erfaßt und in ein elektrisches Signal umgesetzt wird, wobei die von eingeschlossenen Fehlern herrührenden Anteile dieses Signals als elektrische Impulse erscheinen und daß diese Impulse zur Auswertung benutzt werden.

2. Verfahren nach Anspruch 1, dadurch gekennzeichnet, daß der fleigende Lichtpunkt durch einen Laser erzeugt wird.

3. Verfahren nach einem der Ansprüche 1 und 2, dadurch gekennzeichnet, daß der fliegende Lichtpunkt die Farbe der Materialbahn aufweist.

4. Verfahren nach einem der Ansprüche 1 bis 3, dadurch gekennzeichnet, daß das elektrische Signal in Abhängigkeit von der Position des Lichtpunktes bezüglich der Breite der Materialbahn mit einem dieser Position zugeordneten Referenzwert verglichen wird und bei Überschreiten dieses Referenzwertes ein Fehlersignal ausgelöst wird.

5. Verfahren nach Anspruch 4, dadurch gekennzeichnet, daß als Referenzwert ein wählbarer Wert in einen elektronischen Speicher eingegeben wird.

6. Verfahren nach Anspruch 4, dadurch gekennzeichnet, daß aus dem den fliegenden Lichtpunkt bildenden Abtaststrahl ein Referenzstrahl abgeteilt und über einen sich über die gesamte Breite der Materialbahn erstreckenden fehlerfreien Referenzstreifen geführt wird und daß das seitlich aus dem Referenzstreifen austretende Licht erfaßt und in ein elektrisches Signal umgewandelt wird und daß dieses elektrische Signal als Referenzwert verwendet wird.

7. Vorrichtung zur Durchführung des Verfahrens nach Anspruch 1, bestehend aus mindestens einem eine zu prüfende transparente Materialbahn (1) über ihre Breite mit einem fliegenden Lichtpunkt abtastenden Prüfgerät (2), einem das reflektierte und/oder durchgelassene Licht aufnehmenden und in elektrische Signale umwandelnden Empfänger (3) und einer diesem zugeordneten Auswertestation (4), gekennzeichnet durch die zusätzliche seitliche Zuordnung von mindestens einem seitlich aus der Materialbahn austretendes Licht aufnehmenden und in ein elektrisches Signal umwandelnden Fotomultiplier (5, 5') zu mindestens einer Stirnfläche (6) der Materialbahn (1), welcher Fotomultiplier mit der Auswertestattion (4) verbunden ist.

8. Vorrichtung nach Anspruch 7, dadurch gekennzeichnet, daß der Fotomultiplier (5, 5') in Höhe der durch den fliegenden Lichtpunkt auf der Materialbahn (1) beschriebenen Abtastlinie (7) angeordnet ist.

9. Vorrichtung nach Anspruch 7, dadurch gekennzeichnet, daß der Fotomultiplier (5, 5') oberhalb der Materialbahn (1) angeordnet und über einen seitlich der Materialbahn angeordneten ersten Spiegel (28) mit dem seitlich aus der Materialbahn austretenden Licht beaufschlagt ist, und daß unterhalb der Materialbahn ein weiterer Spiegel (27) so angeordnet ist, daß auf der Unterseite der Bahn austretendes Licht ebenfalls zum Fotomultiplier gelenkt wird.

10. Vorrichtung nach einem der Ansprüche 7 bis 9, dadurch gekennzeichnet, daß dem Prüfgerät (2) ein sich über die gesamte Breite der Materialbahn (1) erstreckender Referenzstreifen (21) aus einem fehlerfreien, der Materialbahn (1) in Dicke, Färbung und Zusammensetzung entsprechenden oder identischen Material zugeordnet ist, daß aus dem den fliegenden Lichtpunkt bildenden Abtaststrahl ein Referenzstrahl abgeteilt ist und über den Referenzstreifen (21) geführt ist und daß der Referenzstreifen an seinen schmalen Stirnseiten (22) mit je einem fotoelektrischen Wandler (23) versehen ist, der das aus dem Referenzstreifen austretende Licht in ein elektrisches Signal umwandelt, wobei dieses elektrische Signal als Referenzwert der Auswertestation (4) zugeführt ist.

11. Vorrichtung nach Anspruch 10, dadurch gekennzeichnet, daß der Referenzstreifen (21) mit im gleichen Abstand voneinander sich in Längsrichtung der Materialbahn (1) erstreckenden Einkerbungen (24) versehen ist.

12. Vorrichtung nach Anspruch 11, dadurch gekennzeichnet, daß die Einkerbungen (24) im Abstand von 5 bis 10 mm voneinander angeordnet sind.

13. Vorrichtung nach Anspruch 10, dadurch gekennzeichnet, daß der Referenzstreifen (21) mit einem sich über seine gesamte Länge erstreckenden mattierten Streifen versehen ist.

14. Vorrichtung nach Anspruch 13, dadurch gekennzeichnet, daß der mattierte Streifen durch Sandstrahlen erzeugt ist.

15. Vorrichtung nach Anspruch 13, dadurch gekennzeichnet, daß der mattierte Streifen durch Anbringen eines transparenten Klebestreifens erzeugt ist.

**Claims**

1. Method for inspecting a transparent material sheet, especially sheet glass, for defects, such as foreign bodies or gas bubbles, trapped in the sheet, in which the material sheet is scanned across its width using a flying light spot and the light that passes through the sheet and/or is reflected is detected, converted into electrical signals and evaluated, characterised in that, during the scanning cycle, the light emerging laterally from the material sheet is additionally detected and converted into an electrical signal, the components of this signal that originate from trapped defects appearing in the form of electrical impulses, and that these impulses are used for evaluation.

2. Method according to claim 1, characterised in that the flying light spot is produced by a laser.

3. Method according to either claim 1 or claim 2, characterised in that the flying light spot is of the same colour as the material sheet.

4. Method according to any one of claims 1 to 3, characterised in that, in dependence on the position of the light spot relative to the width of the material sheet, the electrical signal is compared with a reference value associated with this position and defect signal is triggered when this reference value is exceeded.

5. Method according to claim 4, characterised in that a selectable value is input as the reference value to an electronic memory.

6. Method according to claim 4, characterised in that a reference beam is separated off from the scanning beam forming the flying light spot and is guided over a defect-free reference strip extending over the entire width of the material sheet, and that the light emerging laterally from the reference strip is detected and converted into an electrical signal and that this electrical signal is used as the reference value.

7. Device for carrying out the method according to claim 1, comprising at least one inspection instrument (2) that scans the width of the transparent material sheet (1) to be inspected using a flying light spot, a receiver (3) that picks up the light that is reflected and/or that passes through the sheet and converts it into electrical signals, and an evaluation station (4) associated with the receiver, characterised by the additional lateral provision, for at least one face (6) of the material sheet (1), of at least one photomultiplier (5, 5') that picks up light emerging laterally from the material sheet and converts it into an electrical signal, which photomultiplier is connected to the evaluation station (4).

8. Device according to claim 7, characterised in that the photomultiplier (5, 5') is located at the level of the scanning line (7) described on the material sheet (1) by the flying light spot.

9. Device according to claim 7, characterised in that the photomultiplier (5, 5') is located above the material sheet (1) and acted upon by the light emerging laterally from the material sheet by way of a first mirror (28) located at the side of the material sheet, and that a further mirror (27) is located underneath the material sheet in such a manner that light emerging at the underside of the sheet is likewise directed to the photomultiplier.

10. Device according to any one of claims 7 to 9, characterised in that with the inspection instrument (2) is associated a reference strip (21), which extends over the entire width of the material sheet (1) and comprises a defect-free material that is equivalent or identical to the material sheet (1) in thickness, colour and composition, that a reference beam is separated off from the scanning beam that forms the flying light spot and is guided over the reference strip (21) and that each of the narrow end faces (22) of the reference strip is provided with a photoelectric transducer (23) which converts the light emerging from the reference strip into an electrical signal, this electrical signal being supplied to the evaluation station (4) in the form of a reference value.

11. Device according to claim 10, characterised in that the reference strip (21) is provided with indentations (24) extending, at equal distances from one another, in the longitudinal direction of the material sheet (1).

12. Device according to claim 11, characterised in that the indentations (24) are located at a distance of from 5 to 10 mm from one another.

13. Device according to claim 10, characterised in that the reference strip (21) is provided with a dulled strip extending over its entire length.

14. Device according to claim 13, characterised in that the dulled strip is produced by sandblasting.

15. Device according to claim 13, characterised in that the dulled strip is produced by applying a transparent adhesive strip.

**Revendications**

1. Procédé pour le contrôle d'une bande de matériau transparent, en particulier de verre plat, en vue de détecter les défauts inclus dans la bande, tels que corps étrangers ou bulles de gaz, dans lequel on balaie la bande de matériau sur toute sa largeur avec un point lumineux mobile et on capte la lumière transmise et/ou réfléchie, on la transforme en signaux électriques et on l'interprète, caractérisé par le fait que pendant le cycle de balayage, on capte en plus la lumière sortant latéralement de la bande de matériau et on la transforme en un signal électrique, les composantes de ce signal provoquées par les défauts inclus apparaissant sous forme d'impulsions électriques, et que l'on utilise ces impulsions pour l'interprétation.

2. Procédé selon la revendication 1, caractérisé par le fait que le point lumineux mobile est produit par un laser.

3. Procédé selon l'une des revendications 1 et 2, caractérisé par le fait que le point lumineux mobile présente la couleur de la bande de matériau.

4. Procédé selon l'une des revendications 1 à 3, caractérisé par le fait qu'en fonction de la position du point lumineux par rapport à la largeur de la bande de matériau, on compare le signal électrique à une valeur de référence associée à cette position et qu'en cas de dépassement de cette valeur de référence, un signal de défaut est déclenché.

5. Procédé selon la revendication 4, caractérisé par le fait que comme valeur de référence on introduit une valeur facultative dans une mémoire électronique.

6. Procédé selon la revendication 4, caractérisé par le fait qu'à partir du faisceau de balayage formant le point lumineux mobile, on dérive un faisceau de référence et qu'on le déplace sur une bande de référence exempte de défauts s'étendant sur toute la largeur de la bande de référence et on la transforme en un signal électrique et qu'on utilise ce signal électrique comme valeur de référence.

7. Dispositif pour la mise en oeuvre du procédé selon la revendication 1, comprenant au moins un appareil de contrôle (2) balayant sur toute sa largeur avec un point lumineux mobile une bande de matériau transparent (1) à examiner, un récepteur (3) recevant la lumière réfléchie et/ou transmise et la transformant en signaux électriques et un poste d'interprétation (4) y associé, caractérisé par l'addition sur le côté d'au moins un photomultiplicateur (5, 5') associé à au moins une surface frontale (6) de la bande de matériau (1), recevant latéralement la lumière sortant de la bande de matériau et la transformant en un signal électrique, lequel photomultiplicateur est raccordé au poste d'interprétation (4).

8. Dispositif selon la revendication 7, caractérisé par le fait que le photomultiplicateur (5, 5') est disposé à la hauteur de la ligne de balayage (7) décrite par le point lumineux mobile sur la bande de matériau (1).

9. Dispositif selon la revendication 7, caractérisé par le fait que le photomultiplicateur (5, 5') est installé au-dessus de la bande de matériau (1) et reçoit la lumière sortant latéralement du bord de matériau par l'intermédiaire d'un premier miroir (28) placé sur le côté de la bande de matériau, et qu'au dessous de la bande de matériau un autre miroir (27) est placé de façon à dévier également vers le photomultiplicateur la lumière sortant de la face inférieure de la bande.

10. Dispositif selon l'une des revendications 7 à 9, caractérisé par le fait qu'à l'appareil de contrôle (2) est associée une bande de référence (21) s'étendant sur toute la largeur de la bande de matériau (1) et en un matériau exempt de défauts correspondant ou identique en épaisseur, en coloration et en composition à la bande de matériau (1), qu'à partir du faisceau de balayage formant le point lumineux mobile est dérivé un faisceau de référence qui est déplacé sur la bande de référence (21) et que la bande de référence sur ses petits côtés frontaux (22) est respectivement munie d'un convertisseur photoélectrique (23) qui convertit la lumière sortant de la bande de référence en un signal électrique, ce signal électrique étant appliqué en tant que valeur de référence au poste d'interprétation (4).

11. Dispositif selon la revendication 10, caractérisé par le fait que la bande de référence (21) est munie d'entailles (24) placées à la même distance les unes des autres et s'étendant dans le sens longitudinal de la bande de matériau (1).

12. Dispositif selon la revendication 11, caractérisé par le fait que les entailles (24) sont disposées à une distance de 5 à 10 mm les unes des autres.

13. Dispositif selon la revendication 10, caractérisé par le fait que la bande de référence (21) est munie d'une bande matée s'étendant sur toute sa longueur.

14. Dispositif selon la revendication 13, caractérisé par le fait que la bande matée est produite par jet de sable.

15. Dispositif selon la revendication 13, caractérisé par le fait que la bande matée est produite par application d'un ruban adhésif transparent.

Fig. 1

*Fig. 2*

Fig. 3

Fig. 4

35
36
37
1